# DEMANDE DE BREVET EUROPEEN

(11) **EP 1 469 571 A1**
(43) Date de publication de la demande: **20.10.2004**
(21) Numéro de dépôt: 04354015.2
(22) Date de dépôt: 25.03.2004
(51) Int. Cl.: H02B 11/133

(54) **Dispositif de verrouillage d'un appareil électrique débrochable et appareil de coupure comportant un tel dispositif**

(30) Priorité: 15.04.2003 FR 0304677
(71) Demandeur: Schneider Electric Industries SAS, 92500 Rueil-Malmaison (FR)
(72) Inventeur: Lartizien, Henri, 38050 Grenoble Cédex 09 (FR); Michel, Robert, 38050 Grenoble Cédex 09 (FR)
(74) Mandataire: Tripodi, Paul

(57) **Abrégé**

La présente invention concerne un dispositif de verrouillage d'un dispositif de propulsion d'un appareil électrique débrochable monté dans un châssis, ledit dispositif de propulsion comportant un système vis/écrou apte à entraîner l'appareil entre une position embrochée et une position débrochée lors de l'actionnement d'un organe de manoeuvre. Selon l'invention, le dispositif comporte des moyens (11,13,14) pour empêcher la rotation de la vis (5) en sens inverse, et en conséquence le déplacement du disjoncteur, après une manoeuvre d'embrochage ou de débrochage de l'appareil.

## Description

La présente invention concerne un dispositif de verrouillage d'un dispositif de propulsion d'un appareil électrique débrochable, ledit dispositif de propulsion comportant un système vis/écrou apte à entraîner ledit appareil entre une position débrochée et une position embrochée lors de l'actionnement d'un organe de manoeuvre de la vis.

Les disjoncteurs débrochables connus sont propulsés par un système du type vis/écrou et peuvent être positionnés suivant trois positions respectivement une position permettant la réalisation d'essais, une position embrochée pour la mise en service du disjoncteur et une position réservée au transport.

Or, pendant les manoeuvres d'embrochage et de débrochage de l'appareil, des contraintes sont emmagasinées par le système vis/écrou, lesquelles contraintes sont libérées lors des manoeuvres d'ouverture et de fermeture des disjoncteurs. Il en résulte qu'un débrochage ou un retrait de l'appareil peuvent se produire pendant ces manoeuvres d'ouverture et de fermeture.

Ce déplacement du disjoncteur en position embrochée sous tension peut entraîner un arc interne au niveau des embrochages susceptible de provoquer des dommages à l'ensemble constitué par la cellule et le disjoncteur.

La présente invention résout ce problème et propose un dispositif de verrouillage d'un dispositif de propulsion d'un appareil électrique débrochable, ainsi qu'un appareil électrique de coupure équipé d'un tel dispositif.

A cet effet, la présente invention a pour objet un dispositif du genre précédemment mentionné, ce dispositif étant caractérisé en ce qu'il comporte des moyens pour empêcher la rotation de la vis en sens inverse après une manoeuvre d'embrochage ou de débrochage de l'appareil.

Selon une réalisation particulière de l'invention, ces moyens comportent une roue dentée solidaire en rotation de la vis précitée, et une lame ressort actionnée par un organe de manoeuvre, entre une position dans laquelle ladite lame ressort s'engage entre les dents de la roue dentée de manière à réaliser un crantage apte à empêcher la rotation de la vis en sens inverse après une manoeuvre d'embrochage ou de débrochage de l'appareil, et une position dans laquelle la lame ressort libère la roue dentée de manière à permettre la rotation de ladite vis.

Mais d'autres avantages et caractéristiques de l'invention apparaîtront mieux dans la description détaillée qui suit et se réfère aux dessins annexés donnés uniquement à titre d'exemple et dans lesquels :
- Les figures 1 et 2 sont des vues de côté d'un appareil électrique de coupure selon l'invention, équipé d'un dispositif de verrouillage selon l'invention, lesdites figures représentant ledit appareil respectivement dans une position débrochée et une position embrochée,
- La figure 3 est une vue de dessus du boîtier de propulsion de l'appareil précité, comportant un dispositif de verrouillage selon l'invention,
- La figure 4 est une vue partielle, en coupe, de la figure précédente, illustrant le dispositif de verrouillage,
- La figure 5 est une vue partielle, en perspective, illustrant en particulier le boîtier sélecteur comportant le dispositif de verrouillage du dispositif de propulsion,
- La figure 6 est une vue en coupe longitudinale de la figure précédente,
- La figure 7 est une vue partielle en perspective, illustrant la platine de propulsion de l'appareil comportant les organes de manoeuvre, et
- La figure 8 est une vue de face de la figure précédente.

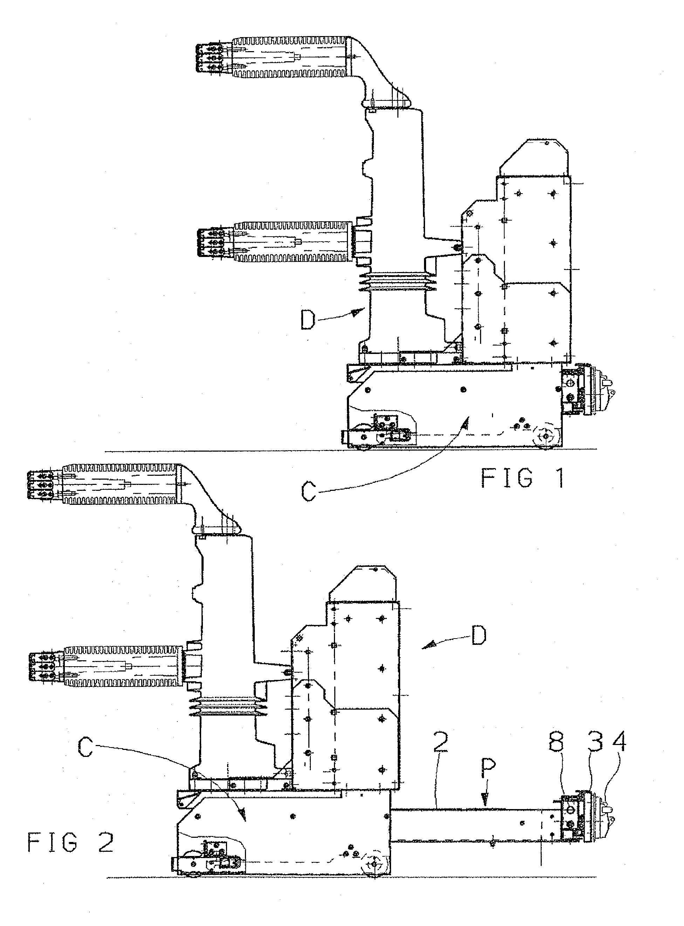

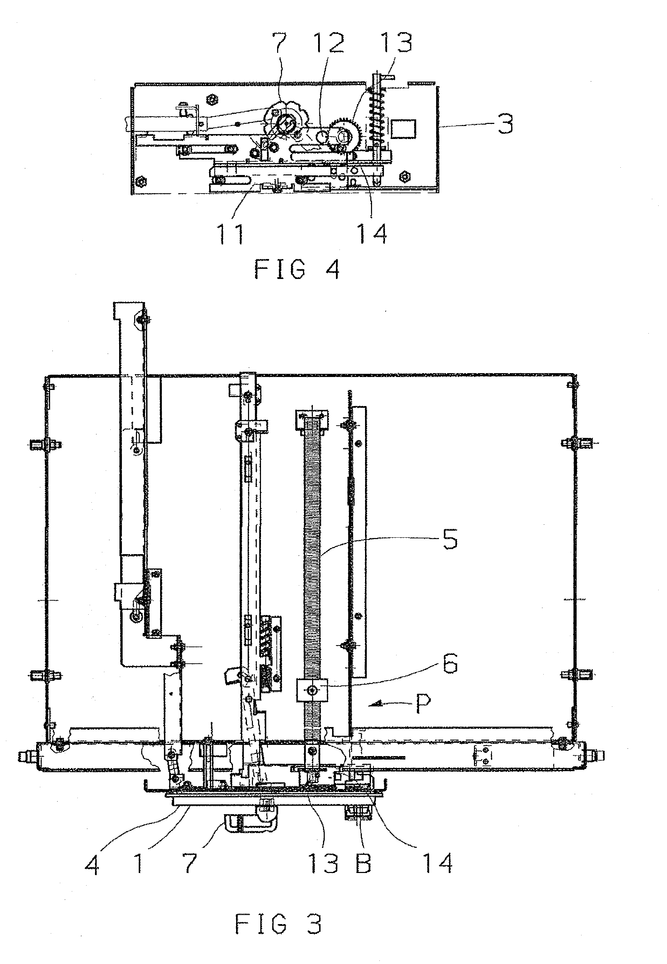

Sur les figures 1 et 2, on voit un disjoncteur électrique débrochable D, monté mobile dans un châssis C entre une position débrochée (fig.1) et une position embrochée (fig.2). Le disjoncteur est dans un état débroché lorsqu'il est dans une position dite débrochée en cellule, une position d'essai en cellule, une position dite d'extraction ou une position de transport. La position embrochée de l'appareil correspond à un état permettant sa mise en service. Le déplacement de l'appareil entre les deux positions précitées s'effectue au moyen d'un dispositif de propulsion P actionnable par un organe de manoeuvre et illustré en particulier sur les figures 3 à 6. Dans ces deux positions respectivement embrochée et débrochée, le disjoncteur D peut prendre deux positions au niveau de ses contacts à savoir une position de contacts ouverts, dans laquelle le passage du courant n'est pas établi à travers le disjoncteur, et une position de contacts fermés dans laquelle le passage du courant est établi. Le passage de la position ouverte à la position fermée s'effectue au moyen d'un bouton poussoir B (figure 3) actionnable à partir d'une face de commande 1 située sur une platine de propulsion 4 de l'appareil.

Sur les figures 1 et 2, on voit que le châssis C, sur lequel est monté le disjoncteur D, comporte un boîtier de propulsion 2, plus particulièrement illustré sur la figure 3, un boîtier dit sélecteur 3 et une platine de propulsion 4.

En se reportant aux figures 3 à 6, on voit que le dispositif de propulsion précité P comporte une vis sans fin 5 sur laquelle est monté un écrou 6 solidarisé à l'appareil, la vis 5 pouvant être entraînée en rotation au moyen d'une manivelle (non représentée) constituant un organe de manoeuvre, la rotation de la vis lors de l'actionnement de l'organe de manoeuvre, entraînant le déplacement de l'appareil entre les deux positions embrochée et débrochée précitées.

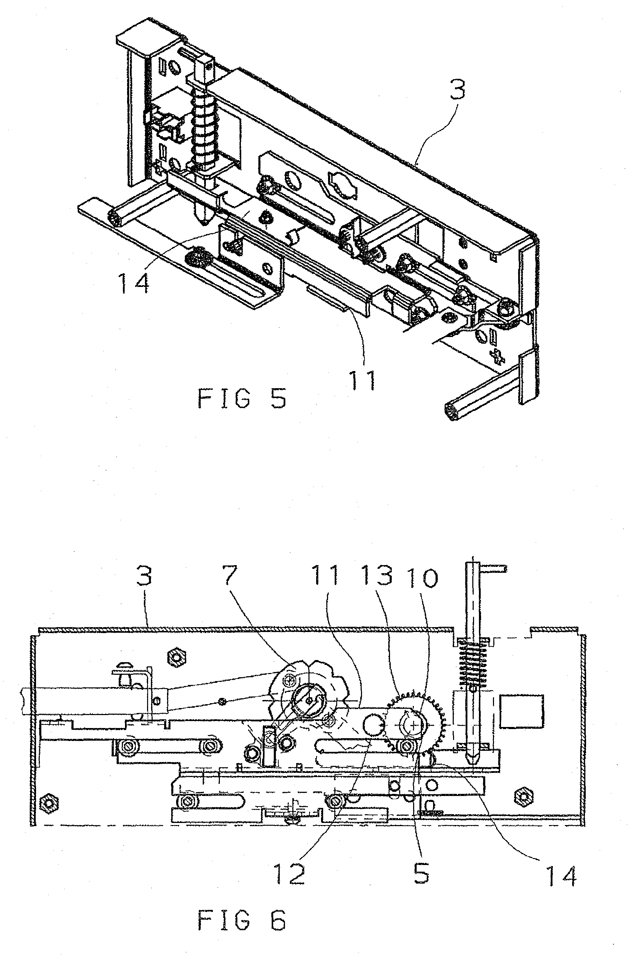

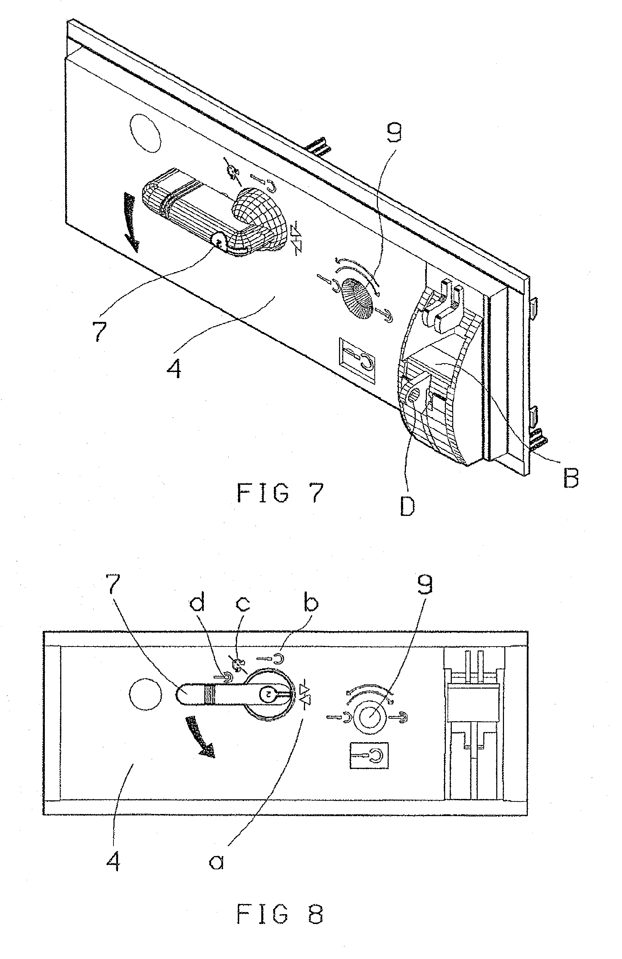

En se reportant aux figures 5 et 6, on voit que le boîtier sélecteur 3 comporte un sélecteur de position 7 permettant de commander le changement de la position de l'appareil. Comme on le voit sur la figure 8, ce sélecteur 7 peut être placé dans quatre positions différentes a,b,c,d. Comme on le voit sur les figures 7 et 8, la platine de propulsion 4 de l'appareil comporte un orifice 9 destiné à permettre le passage de la manivelle de commande de la vis 5, cet orifice 9 se trouvant en regard d'un évidement 10 prévu à l'intérieur de la vis 5. Cet orifice 9, dans certaines positions du sélecteur 7, dites de verrouillage, est apte à être obturé par un tiroir 11 entraîné par le sélecteur 7 de manière à empêcher l'actionnement de la vis 5 par la manivelle, et donc le déplacement de l'appareil. Le tiroir 11 comporte également un orifice 12 pouvant être amené en regard de l'orifice 9 situé dans la platine 4 pour permettre la manoeuvre de la vis 5 dans certaines positions du sélecteur 7.

Conformément à l'invention, cet appareil comporte un autre dispositif de verrouillage destiné à empêcher le déplacement du disjoncteur soit en position débrochée, soit en position embrochée. Ce dispositif comporte une roue dentée 13 montée à l'extrémité de la vis 5 et solidaire en rotation de ladite vis 5, et une lame ressort 14 solidaire du tiroir précité 11. Cette lame ressort 14 est agencée de manière à pouvoir s'engager entre les dents de la roue dentée 13, lors du déplacement du tiroir 11, et à réaliser un crantage. Ce crantage est destiné à empêcher le déplacement en sens inverse de l'appareil lorsque celui-ci est amené dans la position embrochée ou débrochée.

Le fonctionnement du dispositif de l'invention va être décrit dans ce qui suit en référence aux figures.

Le sélecteur de position 7 peut prendre quatre positions. Pour manoeuvrer ce sélecteur 7, dans certaines positions de celui-ci, il est nécessaire de donner un ordre d'ouverture au disjoncteur par l'intermédiaire du bouton poussoir B. Afin d'accéder à ce bouton B, il est nécessaire de faire basculer un cache D, ledit cache D pouvant être cadenassé en fonction des interverrouillages.

Lorsque le sélecteur 7 est dans la position a (figure 8), le système de propulsion P est décranté, c'est à dire que les doigts 8 de crantage latéral sont rétractés. La vis de propulsion 5 est dans une position verrouillée crantée, la mise en place ou l'extraction du disjoncteur de la cellule étant possibles. La vis de propulsion 5 est verrouillée en ce sens qu'elle ne peut pas être entraînée par l'intermédiaire de la manivelle car l'orifice 9 d'introduction de ladite manivelle est obturé par le tiroir 11. D'autre part, dans cette position, la lame ressort 14 est engagée entre les dents de la roue dentée 13 et réalise un crantage de la roue. L'actionnement du bouton poussoir B est nécessaire pour effectuer un changement d'état du sélecteur 7. Lorsque l'opérateur modifie la position du sélecteur 7 et entraîne celui-ci de la position a vers la position b, le sélecteur 7 entraîne les doigts de crantage latéral 8, lesquels immobilisent le disjoncteur dans la cellule en position test ou en position de transport. Le disjoncteur est débroché. Le tiroir 11 étant resté immobile, 1a vis de propulsion est encore verrouillée. La lame ressort 14 est engagée entre les dents de la roue dentée 13 réalisant ainsi le crantage et le verrouillage de la vis de propulsion 5 empêchant le déplacement de l'appareil.

Lorsque l'opérateur souhaite réaliser un embrochage de l'appareil, il donne un ordre d'ouverture en actionnant le bouton poussoir B et entraîne le sélecteur de la position b à la position c. Pendant son déplacement, le sélecteur 7 entraîne le tiroir 11 en translation, ce qui libère la roue dentée 13 appartenant à la vis de propulsion 5, de la lame ressort 14, laquelle lame ressort 14 étant solidarisée en translation au tiroir 11. Ce mouvement du tiroir 11 libère en outre l'orifice d'entrée 9 de la manivelle, l'orifice 12 prévu dans le tiroir 11 étant amené en regard de l'orifice 9 prévu dans la platine de propulsion 4 de l'appareil pour l'introduction de la manivelle. Dans cette position, il est alors possible de manoeuvrer la vis de propulsion de manière à réaliser l'embrochage de l'appareil. Après la réalisation de cet embrochage, l'opérateur entraîne le sélecteur 7 de la position c vers la position d. Ceci engendre d'une part, le déplacement du tiroir 11 de manière que ledit tiroir 11 obture l'orifice d'entrée 9 de la manivelle, et d'autre part, l'engagement de la lame ressort 14 entre les dents de la roue dentée 13, de manière que cette lame ressort 14 empêche le mouvement en sens inverse de l'appareil, c'est à dire le débrochage. Le disjoncteur D est alors dans une position embrochée et crantée, la vis de propulsion 5 est verrouillée. Le bouton poussoir B se trouve libéré et peut être sollicité pour la réalisation des différentes manoeuvres. Le crantage de la vis 5 se fait naturellement pendant la manoeuvre du sélecteur de position 7.

On a donc réalisé grâce à l'invention, un système à roue dentée crantée par une lame ressort, permettant d'empêcher le mouvement en rotation de la vis de propulsion soit en position essai verrouillé fermé ou ouvert, soit en position embroché verrouillé fermé ou ouvert ou en position de transport ouvert, en fait en toute position fonctionnelle prise par l'appareil.

Ce système peut être adapté à tous les systèmes de propulsion d'appareil du type à vis et écrou.

Bien entendu, l'invention n'est pas limitée au mode de réalisation décrit et illustré qui n'a été donné qu'à titre d'exemple.

C'est ainsi que l'invention s'applique à tout appareil mobile sur un châssis et verrouillable, tel que par exemple un chariot de sectionnement apte à relier un jeu de barres supérieur à des câbles ou à un jeu de barres inférieur.

Au contraire, l'invention comprend tous les équivalents techniques des moyens décrits ainsi que leurs combinaisons si celles-ci sont effectuées suivant son esprit.

## Revendications

1. Dispositif de verrouillage d'un dispositif de propulsion d'un appareil électrique de coupure débrochable monté dans un châssis, ledit dispositif de propulsion comportant un système vis/écrou apte à entraîner ledit appareil entre une position embrochée et une position débrochée lors de l'actionnement d'un organe de manoeuvre, le dispositif comportant des moyens pour empêcher la rotation de la vis en sens inverse après une manoeuvre d'embrochage ou de débrochage de l'appareil, **caractérisé en ce que** ces moyens comportent une roue dentée (13) solidaire en rotation de la vis précitée (5), et une lame ressort (14) actionnée par un organe de manoeuvre, entre une position dans laquelle ladite lame ressort (14) s'engage entre les dents de la roue dentée (13) de manière à réaliser un crantage apte à empêcher la rotation de la vis (5) en sens inverse après une manoeuvre d'embrochage ou de débrochage de l'appareil D, et une position dans laquelle la lame ressort (14) libère la roue dentée (13) de manière à permettre la rotation de ladite vis (5).

2. Dispositif de verrouillage selon la revendication 1, **caractérisé en ce que** l'appareil D comportant un sélecteur de position (7) apte à permettre la manoeuvre dudit appareil dans différentes positions, la lame ressort précitée (14) est solidaire d'un tiroir (11) monté coulissant à l'intérieur du châssis entre une position dans laquelle la lame ressort (14) est engagée entre les dents de la roue dentée (13) et une position dans laquelle la lame ressort (14) n'est plus engagée entre les dents de la roue dentée (13), ledit tiroir (11) étant actionné entre ces positions par le sélecteur précité (7).

3. Dispositif de verrouillage selon la revendication 2, ledit appareil comportant une platine de propulsion (4) comportant un premier orifice (9) de passage d'un organe de manoeuvre de la vis de propulsion (5) entre les positions embrochée et débrochée précitées de l'appareil D, **caractérisé en ce que** le tiroir précité (11) comporte un orifice dit second (12) apte à être amené par le sélecteur (7) dans une position située en regard du premier orifice précité (9) de manière à permettre l'introduction de l'organe de manoeuvre dans les deux orifices (9,12) et la manoeuvre de la vis (5), oubien dans une position dans laquelle les deux orifices (9,12) ne sont pas superposés de manière à empêcher l'introduction de l'organe de manoeuvre.

4. Dispositif de verrouillage selon l'une quelconque des revendications précédentes, **caractérisé en ce qu'**il est mis en service dans la position d'essai, dans la position embrochée et dans la position de transport ou d'extraction de l'appareil D.

5. Appareil électrique de coupure comportant un dispositif de verrouillage selon l'une quelconque des revendications précédentes.

6. Disjoncteur comportant un dispositif de verrouillage selon l'une quelconque des revendications précédentes.

7. Chariot de sectionnement électrique apte à relier un jeu de barres supérieur à des câbles ou à un jeu de barres inférieur, **caractérisé en ce qu'**il comporte un dispositif selon l'une quelconque des revendications précédentes.
